(19) Europäisches Patentamt

European Patent Office

Office européen des brevets

(11) **EP 1 519 187 A1**

(12) **EUROPEAN PATENT APPLICATION**

(43) Date of publication:
**30.03.2005 Bulletin 2005/13**

(51) Int Cl.[7]: **G01N 21/03**, G01N 21/55

(21) Application number: **04022434.7**

(22) Date of filing: **21.09.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Ohtsuka, Hisashi**<br>  **Ashigarakami-gun, Kanagawa-ken (JP)**<br>• **Kimura, Toshihito**<br>  **Ashigarakami-gun, Kanagawa-ken (JP)** |
| (30) Priority: **24.09.2003 JP 2003331549** | (74) Representative: **Klunker . Schmitt-Nilson . Hirsch**<br>**Winzererstrasse 106**<br>**80797 München (DE)** |
| (71) Applicant: **Fuji Photo Film Co., Ltd.**<br>**Kanagawa-ken (JP)** | |

(54) **Surface plasmon resonance sensor and sensor unit for accurately measuring small refractive index fluctuations**

(57)      A surface plasmon resonance sensor includes a light source (14) emitting a light beam (L), a metal film (12) provided on one surface of the dielectric block (11) of a sensor unit, a light beam projecting system (15) which causes the light beam (L) to enter the dielectric block (11) to impinge upon the interface (12a) between said one surface of the dielectric block (11) and the metal film (12) so that total internal reflection conditions are satisfied at the interface (12a), and a photodetector (17) which detects the intensity of the light beam reflected in total internal reflection at the interface (12a) and detects a state of attenuation in total internal reflection. The relation $-2 \times 10^{-5} \leqq (n3 \blacksquare \Delta n1 - n1 \blacksquare \Delta n3) \leqq 2 \times 10^{-5}$ is satisfied wherein n1 and n3 represent refractive indexes of the solvent of the sample liquid (5) and the dielectric block (11), and $\Delta n1$ and $\Delta n3$ represent the rates of temperature-change of the refractive indexes of the solvent of the sample liquid (5) and the dielectric block. Specifically, when pure water or physiological saline is used as the solvent, the dielectric block (11) of the sensor unit (10) may comprise Zeonex ® E48R.

EP 1 519 187 A1

**Description**

BACKGROUND OF THE INVENTION

Field of the Invention

This invention relates to a surface plasmon resonance sensor for quantitatively analyzing a material in a sample on the basis of generation of surface plasmon and a sensor unit for use in the surface plasmon resonance sensor.

Description of the Related Art

In metal, free electrons vibrate in a group to generate compression waves called plasma waves. The compression waves generated in a metal surface are quantized into surface plasmon.

There have been proposed various surface plasmon resonance sensors for quantitatively analyzing a material in a sample utilizing a phenomenon that such surface plasmon is excited by light waves. Among those, one employing a system called "Kretschmann configuration" is best known. See, for instance, Japanese Unexamined Patent Publication No. 6(1994)-167443.

The surface plasmon resonance sensor using the Kretschmann configuration basically comprises a dielectric block shaped, for instance, like a prism, a metal film which is formed on one face of the dielectric block and is brought into contact with a sample, a light source emitting a light beam, an optical system which causes the light beam to enter the dielectric block at various angles of incidence so that total internal reflection conditions are satisfied at the interface of the dielectric block and the metal film and various angles of incidence of the light beam to the interface of the dielectric block and the metal film including an angle of incidence at which attenuation in total internal reflection is generated due to surface plasmon resonance can be obtained, and a photodetector means which detects the intensity of the light beam reflected in total internal reflection at the interface and detects a state of attenuation in total internal reflection.

In order to obtain various angles of incidence of the light beam to the interface, a relatively thin incident light beam may be caused to impinge upon the interface changing the angle of incidence or a relatively thick incident light beam may be caused to impinge upon the interface in the form of convergent light or divergent light so that the incident light beam includes components impinging upon the interface at various angles. In the former case, the light beam which is reflected from the interface at an angle which varies as the angle of incidence changes may be detected by a photodetector which is moved in synchronization with the change of the angle of incidence or by an area sensor extending in the direction in which reflected light beam is moved as the angle of incidence changes. In the latter case, an area sensor which extends in directions so that all the components of light reflected from the interface at various angles can be detected by the area sensor may be used.

In such a surface plasmon resonance sensor, when a light beam impinges upon the metal film at a particular angle of incidence θsp not smaller than the angle of total internal reflection, evanescent waves having an electric field distribution in the sample in contact with the metal film are generated and surface plasmon is excited in the interface between the metal film and the sample. When the wave number vector of the evanescent light is equal to the wave number of the surface plasmon and wave number matching is established, the evanescent waves and the surface plasmon resonate and light energy is transferred to the surface plasmon, whereby the intensity of light reflected in total internal reflection at the interface of the dielectric block and the metal film sharply drops. The sharp intensity drop is generally detected as a dark line by the photodetector.

The aforesaid resonance occurs only when the incident light beam is p-polarized. Accordingly, it is necessary to set the surface plasmon sensor so that the light beam impinges upon the interface in the form of p-polarized light or p-polarized components are only detected.

When the wave number of the surface plasmon can be known from the angle of incidence θsp at which the phenomenon of attenuation in total internal reflection (ATR) takes place, the dielectric constant of the sample can be obtained. That is,

$$K_{sp}(\omega) = \frac{\omega}{c} \sqrt{\frac{\varepsilon_2(\omega)\varepsilon_1}{\varepsilon_2(\omega)+\varepsilon_1}}$$

wherein $K_{sp}$ represents the wave number of the surface plasmon, $\omega$ represents the angular frequency of the surface plasmon, c represents the speed of light in a vacuum, and $\varepsilon$ m and $\varepsilon$ s respectively represent the dielectric constants of the metal and the sample.

When the dielectric constant $\varepsilon_1$ of the sample is known, the concentration of a specific material in the sample can be determined on the basis of a predetermined calibration curve or the like. Accordingly, the specific material can be quantitatively detected by detecting the angle of incidence θsp at which the intensity of light reflected in total internal reflection from the interface of the prism and the metal film sharply drops (this angel θsp will be referred to as "the attenuation angle θsp", hereinbelow).

Such a measuring apparatus is employed , as a biosensor, to analyze a sample, that is, a sensing medium (e.g. antibody), which combines with a particular material (e.g., antigen), is disposed on the metal film and whether the sample includes a material combined with the sensing medium or the state of combination of the sample with the sensing medium is detected. As a method of analyzing a sample in this way, there has been proposed a method in which, in order to eliminate the influence of the solvent (e.g., physiological saline) in the sample liquid on the refractive index of the sample liquid, refractive index information on buffer (the same as the solvent) free from the analyte (material to be analyzed) is first obtained and then the sample liquid is dispensed to the buffer to measure the refractive index information of the mixture after the reaction, whereby only the reaction of the analyte is precisely extracted.

However, there has been a problem that the measured value of the refractive index n of the sample liquid is affected by the change of the temperature. See, for instance, "Analytical Chemistry", 1999, vol. 71, pp4392 to 4396. For example, the measured value of the refractive index n of the sample liquid fluctuates by $dn/dt \fallingdotseq 1 \times 10^{-4}$. Since, a change of the measured value of the refractive index n by $1 \times 10^{-6}$ appears fluctuation in the signal by 1RU(=0.0001° ) ("Journal of Colloid and Interface Science, 1991, vol. 143, No. 2, pp513 to 526), the fluctuation of the measured value of the refractive index n of the sample liquid fluctuates by $1 \times 10^{-4}$ corresponds to fluctuation of the signal by about 100 (RU/°C).

In order to increase the reproducibility to about 10% of a CV value when detection is made at a high sensitivity of about 1RU, it is necessary to suppress the fluctuation of the signal to be 0.1RU at most. Temperature control of 0.001°C is necessary to suppress the fluctuation of the signal to be 0.1RU at most. Though it is possible temperature control of 0.01°C, temperature control of 0.001°C is practically impossible. Accordingly, at present, fluctuation of the signal of 1RU must be accepted.

SUMMARY OF THE INVENTION

In view of the foregoing observations and description, the primary object of the present invention is to provide a surface plasmon resonance sensor which can conduct reliable high-sensitivity measurement up to 1RU.

A formula representing the angle θ of the dark line based on the surface plasmon resonance (a formula of the SPR signal) is expressed as a function including therein refractive indexes (the real parts) n1, n2 and n3 of the solvent, the metal film and the dielectric block. Though the influence of the temperature fluctuation t is contained in those indexes n, it is neglected in general. These inventors have succeeded to analytically derive the relation between the temperature-dependency (dθ/dt) of the angle of the dark line and the physical property (dn/dt) of the sample liquid and the cup by representing the formula of the SPR signal as a term of the temperature fluctuation. The relation derived by these inventors is as follows, wherein ε 1 represents the dielectric constant of the solvent of the sample liquid, ε 2 represents the dielectric constant of the metal film and ε 3 represents the dielectric constant of the dielectric block. The angle θ (rad) of the dark line which is an angle of the surface plasmon signal can be approximated as follows as a function taking a real part.

$$\theta = \mathrm{Re}\left( \sin^{-1}\left\{ \frac{1}{\sqrt{\varepsilon 3}}\left( \frac{\varepsilon 2 \times \varepsilon 1}{\varepsilon 2 + \varepsilon 1} \right)^{0.5} \right\} \right) = \mathrm{Re}\left( \sin^{-1}\left\{ \frac{\sqrt{\varepsilon 1}}{\sqrt{\varepsilon 3}}\left( \frac{\varepsilon 2}{\varepsilon 2 + \varepsilon 1} \right)^{0.5} \right\} \right)$$

$$= \mathrm{Re}\left( \sin^{-1}\left\{ \frac{\sqrt{\varepsilon 1}}{\sqrt{\varepsilon 3}} \times \frac{1}{\sqrt{1 + \dfrac{\varepsilon 1}{\varepsilon 2}}} \right\} \right) \cdots (2)$$

When the metal is gold or silver, |ε1|<<|ε2|,
Accordingly,

$$K \equiv \frac{1}{\sqrt{1 + \dfrac{\varepsilon 1}{\varepsilon 2}}}$$

can be considered to be a constant, and
the formula (2) can be expressed as

$$\theta = \mathbf{Re}\left( \sin^{-1}\left\{ K \times \frac{\sqrt{\varepsilon 1}}{\sqrt{\varepsilon 3}} \right\} \right) \cdots (3)$$

Since $\varepsilon 1$ and $\varepsilon 3$ contain no imaginary part, the formula (3) can be represented by only the real numbers as the following formula (4).

$$\theta = \sin^{-1}(K \times n1/n3) \tag{4}$$

The refractive index n is not constant independently of the temperature and fluctuates as represented by $(n+\Delta n \times t)$ with the temperature fluctuation t during measurement. The formula (4) can be rewritten as follows taking into account this as a function including the temperature fluctuation t.

$$\theta(t) = \sin^{-1}\left( K \times \frac{n1 + \Delta n1 \times t}{n3 + \Delta n3 \times t} \right)$$

wherein $n1 = dn1/dt$ and $\Delta n3 = dn3/dt$.
Though K fluctuates with t strictly, it is possible to consider K as a constant for the reason above.
When t is sufficiently small, the change of $\theta(t)$ with a fine temperature fluctuation t can be displaced with a differentiation and can be expressed by the following formula (5).

$$d\theta/dt = \left( 1 - K^2 \times \left\{ \frac{n1 + \Delta n1 \times t}{n3 + \Delta n3 \times t} \right\}^2 \right)^{-0.5} \times K \times \frac{n3 \times \Delta n1 - n1 \times \Delta n3}{(n3 \times \Delta n3 \times t)^2}$$
$$= K'(t) \times (n3 \times \Delta n1 - n1 \times \Delta n3) \cdots (5)$$

wherein

$$k'(t) = \left( 1 - K^2 \times \left\{ \frac{n1 + \Delta n1 \times t}{n3 + \Delta n3 \times t} \right\}^2 \right)^{-0.5} \times K \times \frac{1}{(n3 + \Delta n3 \times t)^2}$$

The above replacement is reasonable since the measuring device is somewhat temperature-controlled (temperature fluctuation $|t| \leqq 1°C$) in order to effect highly accurate measurement of not larger than 100RU.
In the range of the temperature fluctuation, the change of K'(t) is less sensitive to change of t, and accordingly, K'(t) may be considered to be a constant. When aqueous solution (e.g., pure water, physiological saline or the like) is used as the solvent, the value of K'(t) may be considered to be 0.95.

At this time, the above formula (5) representing the surface plasmon resonance signal versus the temperature can be rewritten as follows.

$$d\theta/dt \fallingdotseq 0.95 \times (n3 \blacksquare \Delta n1 - n1 \blacksquare \Delta n3) \quad (rad/°C)$$

$$= 57 \times 0.95 \times (n3 \blacksquare \Delta n1 - n1 \blacksquare \Delta n3) \quad (deg./°C)$$

Since, $1 deg. = 10^4 RU$

$$d\theta/dt \fallingdotseq 5.42 \times 10^5 \times (n3 \blacksquare \Delta n1 - n1 \blacksquare \Delta n3) \quad (RU/°C)$$

Accordingly, when $n3 \blacksquare \Delta n1 - n1 \blacksquare \Delta n3 = 0$, $d\theta/dt = 0$, which means that the temperature dependency is nullified, which is optimal. However, the desired accuracy can be satisfied, when $-10RU \leqq d\theta/dt \leqq 10RU$.

This invention has been made on the basis of this recognition.

In accordance with one aspect of the present invention, there is provided a surface plasmon resonance sensor comprising

a light source emitting a light beam,

a sensor unit formed by a dielectric block transparent to the light beam, a metal film provided on one surface of the dielectric block, and a sample holding portion which holds a sample on the metal film,

a light beam projecting means which causes the light beam to enter the dielectric block to impinge upon the interface between said one surface of the dielectric block and the metal film so that total internal reflection conditions are satisfied at the interface, and

a photodetector means which detects the intensity of the light beam reflected in total internal reflection at the interface and detects a state of attenuation in total internal reflection, wherein the improvement comprises that

the relation

$$-2 \times 10^{-5} \leqq (n3 \blacksquare \Delta n1 - n1 \blacksquare \Delta n3) \leqq 2 \times 10^{-5}$$

is satisfied wherein n1 and n3 represent refractive indexes of the solvent of the sample liquid and the dielectric block, and $\Delta n1$ and $\Delta n3$ represent the rates of temperature-change dn1/dt and dn3/dt of the refractive indexes of the solvent of the sample liquid and the dielectric block.

In accordance with another aspect of the present invention, there is provided a sensor unit comprising

a dielectric block transparent to the light beam, a metal film provided on one surface of the dielectric block, and

a sample holding portion which holds a sample on the metal film, wherein the improvement comprises that

the relation

$$-2 \times 10^{-5} \leqq (n3 \blacksquare \Delta n1 - n1 \blacksquare \Delta n3) \leqq 2 \times 10^{-5}$$

is satisfied wherein n1 and n3 represent refractive indexes of the solvent of the sample liquid and the dielectric block, and $\Delta n1$ and $\Delta n3$ represent the rates of temperature-change dn1/dt and dn3/dt of the refractive indexes of the solvent of the sample liquid and the dielectric block.

Specifically, when pure water or physiological saline is used as the solvent, the dielectric block of the sensor unit may comprise Zeonex E48R (ZEON CORPORATION).

The following table 1 shows rates of temperature-change d$\theta$/dt of the measured value when pure water (n1=1.33, $\Delta n1 = -8 \times 10^{-5}$) or physiological saline (n1=1.36, $\Delta n1 = -8 \times 10^{-5}$) is used as the solvent and dielectric blocks which are about the same in the refractive index n3 and different in $\Delta n3$ are employed.

Table 1

| $\Delta n3$ [$\times 10^{-5}$] | pure water d$\theta$/dt [RU/°C] | physiological saline d$\theta$/dt [RU/°C] |
|---|---|---|
| 0 | -65.04 | -65.04 |
| -1 | -57.83 | -57.67 |

Table 1   (continued)

| Δn3 [×10⁻⁵] | pure water dθ/dt [RU/°C] | physiological saline dθ/dt [RU/°C] |
|---|---|---|
| -7 | -14.58 | -13.44 |
| -8 | -7.37 | -6.07 |
| -9 | -0.16 | 1.30 |
| -10 | 7.05 | 8.67 |
| -11 | 14.25 | 16.04 |

As can be understood from table 1, dθ/dt can be suppressed within about 10RU/°C, when the rates of temperature-change $\Delta n3$ of the dielectric block is in the range of $-7\times10^{-5}<\Delta n3<-11\times10^{-5}$ in the case where pure water or physiological saline is used as the solvent.

In accordance with the present invention, $-2\times10^{-5}\leqq(n3\blacksquare\Delta n1-n1\blacksquare\Delta n3)\leqq2\times10^{-5}$ is satisfied. This is substantially equivalent to $-10RU\leqq d\theta/dt\leqq10RU$. That is, the attenuation angle signal fluctuates within 10RU by temperature-fluctuation of 1°C. However, when a temperature control of 0.01°C is conducted, fluctuation in the attenuation angle signal can be suppressed to within 0.1RU, whereby a high accuracy measurement which is required a reliability up to 1RU can be effected. When a combination of the solvent and the dielectric block having indexes and the rates of temperature-range which satisfy dθ/dt=0 is selected, it is possible to nullify the change of the signal with temperature.

BRIEF DESCRIPTION OF THE DRAWINGS

Figure 1 is a side view of a surface plasmon resonance sensor in accordance with a first embodiment of the present invention, and
Figure 2 is a view showing the relation between the angle of incidence of the light beam to the interface and the intensity of the detected light beam.

DESCRIPTION OF THE PREFERRED EMBODIMENTS

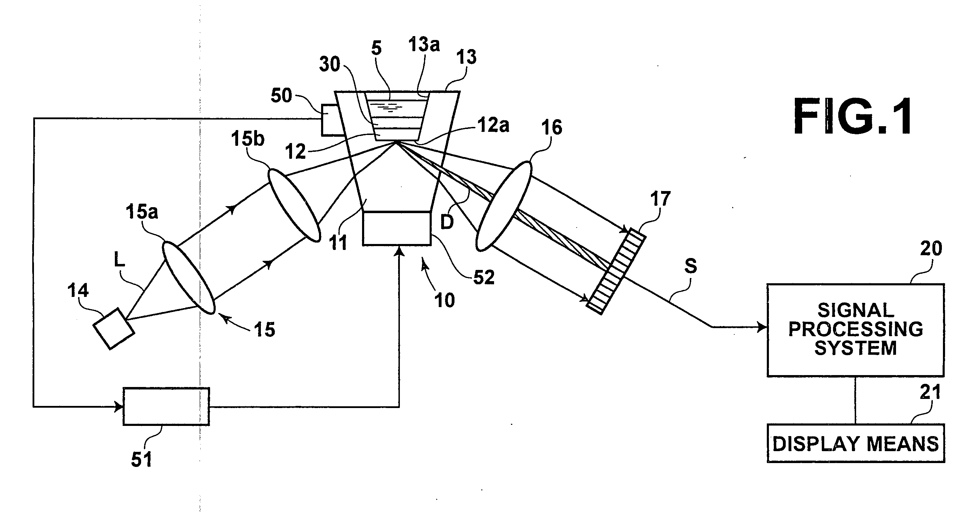

In Figure 1, a surface plasmon resonance sensor of this embodiment comprises a measuring chip 10 (a type of the sensor unit) , a laser 14 which may comprise, for instance, a semiconductor laser which emits a light beam L for measurement (a laser beam), a light beam projecting optical system 15 which causes the light beam L to impinge upon the measuring chip 10, a collimator lens 16, a photodetector 17, a signal processing system 20 which controls drive of the laser 14 and effects the process to be described later upon receipt of the output signal S of the photodetector 17, a display means 21 connected to the signal processing system 20.

The measuring chip 10 comprises a dielectric block 11 substantially of a rectangular pyramid, a metal film 12 (e.g., gold or silver) which is formed on one surface of the dielectric block 11, a sample holding frame 13 of a tubular member which defines a laterally closed space above the metal film 12. The sample holding frame 13 is circular in cross-section and the inner surface thereof flares upward. The flared space in the sample holding frame 13 functions as a well 13a in which sample liquid 5 is stored. The dielectric block 11 and the sample holding frame 13 are integrally molded by transparent resin having a refractive index to be described later. A sensing medium 14, which is combined with a particular material, is fixed on the metal film 12.

The transparent resin forming the dielectric block 11 has a refractive index which satisfies the relation $-2\times10^{-5}\leqq(n3\blacksquare\Delta n1-n1\blacksquare\Delta n3)\leqq2\times10^{-5}$ wherein n1 and n3 represent refractive indexes of the solvent of the sample liquid 5 and the dielectric block 11, and $\Delta n1$ and $\Delta n3$ represent the rates of temperature-change dn1/dt and dn3/dt of the refractive indexes of the solvent of the sample liquid 5 and the dielectric block 11.

The light beam projecting optical system 15 collects the light beam L and causes the light beam L to enter the dielectric block 11 in a collected state to impinge upon the interface 12a between the dielectric block 11 and the metal film 12 at various angles of incidence. The light beam projecting optical system 15 comprises a collimator lens 15a which converts the light beam L emitted from the laser 14 as a divergent light beam, into a parallel light, and a condenser lens 15b which condenses the collimated light beam L on the interface 12a. The angle of incidence of the light beam L to the interface 12a is in such a range that total internal reflection conditions are satisfied and surface plasmon resonance occurs at the interface 12a.

The light beam L is caused to impinge upon the interface 12a in a p-polarized state. This can be realizedbypositioning the laser 14 so that its direction of polarization is directed in a predetermined direction. Otherwise, the direction of polarization of the light beam L may be controlled by a wavelength plate or a polarizing plate.

The photodetector 17 comprises a line sensor formed of a plurality of photosensor elements which are arranged in a row extending in a direction of arrow X in Figure 1. The light beam L is converted into a parallel light beam by a collimator lens 16 after reflected in total internal reflection at the interface 12a, and then detected by the photodetector 17.

In this particular embodiment, the surface plasmon resonance sensor has a temperature-control means comprising a thermistor 50 which measures the temperature of the dielectric block 11, a Peltier element 52 which controls a temperature and a driver 51 which drives the Peltier element 52. The temperature-control may be effected in other various ways. For example, though the thermistor 50 is in contact with a side surface of the dielectric block 1 in this embodiment, the thermistor 50 may be located in any position so long as it can measure the temperature of the dielectric block 11 if a thermal equilibrium is established between the dielectric block 11 and the environment. Though the Peltier element 52 is located on the bottom of the bottom of the dielectric block 11, it need not be disposed there.

The temperature-control means controls the temperature during measurement within about 0.01°C.

Sample analysis by the surface plasmon resonance sensor of this embodiment will described, hereinbelow. The measuring chip 10 is supplied with the sample liquid 5.

The laser 14 is driven under instruction of the signal processing system 20 and a light beam L is emitted from the laser 14 impinges upon the interface 12a between the dielectric block 11 and the metal film 12. The light beam L impinging upon the interface 12a is reflected in total internal reflection at the interface 12a and the reflected light beam L is detected by the photodetector 17.

As shown in Figure 1, the light beam L emitted from the laser 14 as a divergent light beam is focused on the interface 12a. Accordingly, the light beam L includes components impinging upon the interface at various angles of incidence of the light beam L to the interface 12a and the reflected light beam L includes components reflected at the interface 12a at various angles of reflection.

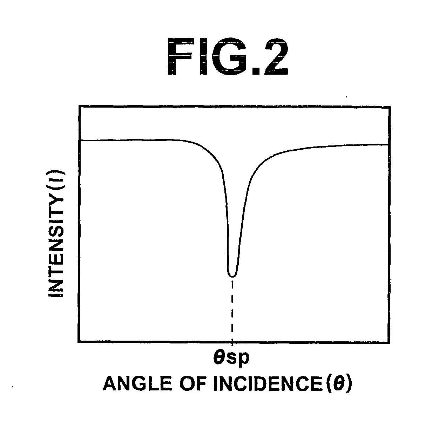

The component of the light beam L impinging upon the interface 12a at a particular angle of incidence $\theta sp$ excites surface plasmon in the interface 12a between the metal film 12 andmaterial in contact with the metal film 12 and the intensity of the component reflected in total internal reflection sharply drops. That is, the particular angle of incidence $\theta sp$ is the attenuation angle or the angle at which the total internal reflection is cancelled and the intensity of the reflected light beam exhibits a minimum value at the angle of incidence $\theta sp$. The region where the intensity I of the reflected light beam sharply drops is generally observed as a dark line D in the reflected light beam L. Figure 2 is a view showing the relation between the angle of incidence $\theta$ of the light beam L to the interface and the intensity I of the light beam received by the photodetector 17.

The signal processing system 20 detects the amounts of light detected by the photosensor elements on the basis of the signal S output from the photodetector 17 and determines the attenuation angle $\theta sp$ on the basis of the position of the photosensor element detecting the dark line.

The light beam projecting optical system 15 may be arranged to cause the light beam L to impinge upon the interface 12a in a defocused state. In this way, errors in measurement of the state of surface plasmon resonance (e. g., measurement of the position of the dark line) are averaged and the measuring accuracy can be improved.

Since the sensing medium 14 is fixed to the surface of the metal film 12 in this embodiment, the refractive index of the sensing medium 14 on the metal film 12 changes with change of the state of combination of the particular material with the sensing medium 14. By continuing to measure change of the attenuation angle $\theta sp$, change in the state of combination of the particular material with the sensing medium 14 can be investigated.

That is, when the attenuation angle $\theta sp$ changes with time, it may be determined that the particular material contained in the sample liquid 5 combines with the sensing medium 14. Whereas, when the attenuation angle $\theta sp$ does not change with time, it may be determined that there is no particular material contained in the sample liquid 5. On the basis of the principle described above, the signal processing system 20 detects whether the particular material is in the sample liquid 5, and causes the display means 21 to display the result of detection.

In this particular embodiment, the temperature during measurement is controlled within about 0.01°C by the temperature-control means. As described above, in the past, it has been impossible to obtain a reliability of 1RU in the measured value in measuring devices which accept a temperature fluctuation up to 0.01°C.

However, in this embodiment, fluctuation in the refractive index per 1°C can be suppressed to about 10RU, and accordingly, when temperature-control is conducted at an accuracy of 0.01°C, the fluctuation in the refractive index can be suppressed to about 1RU, and reliable high-sensitivity measurement up to 1RU can be realized.

A combination of pure water or physiological saline (as the solvent) and Zeonex E48R (ZEON CORPORATION) (as the material of the dielectric block) can be, for instance, used.

The values of $d\theta/dt$ when Zeonex E48R is employed as the material of the dielectric block 11 and pure water and physiological saline are employed as the solvent are listed in the following table 2.

Table 2

| | n1 | Δn1 (×10⁻⁵) | Zeonex E48R | | dθ/dt (RU°C) |
|---|---|---|---|---|---|
| | | | n3 | Δn3 (× 10⁻⁵) | |
| pure water | 1.328 | -8 | 1.50 | -8.87 | -1.2 |
| physiological saline | 1.36 | -8 | | | +0.3 |

As can be seen from the above table 2, in the case of pure water and physiological saline, the values of dθ/dt are both very small, and accordingly, when temperature-control is conducted at an accuracy of 0.01°C, reliable high-sensitivity measurement up to 1RU can be realized. Especially, in the case of physiological saline, the measured value can be obtained at a very high accuracy and reliable high-sensitivity measurement up to 1RU can be realized even when accuracy of temperature-control is only 0.3°C.

The values of dθ/dt when different materials are employed as the material of the dielectric block 11 with physiological saline employed as the solvent are listed in the following table 3.

Table 3

| | n3 | Δn3 (× 10⁻⁵) | dθ/dt (RU/°C) |
|---|---|---|---|
| Zeonex E48R | 1.50 | -8.87 | 0.3 |
| Zeonex 330R | 1.50 | -11 | 16.0 |
| Polymethyl metacrylate | 1.49 | -10.3 | 10.9 |
| Polycarbonate | 1.59 | -11.6 | 16.1 |
| BK7 | 1.517 | 0.24 | -67.5 |
| FK52 | 1.486 | -0.68 | -59.4 |

As can be understood from table 3, the absolute value of dθ/dt constantly exceeds 10 when the dielectric block 11 is formed by a material other than Zeonex E48R, and accordingly, it is impossible to realize reliable high-sensitivity measurement up to 1RU even when temperature-control is conducted at an accuracy of 0.01°C. The values of the refractive index and the rates of temperature-change are given by data in catalogue from SCHOTT.

## Claims

1.  A surface plasmon resonance sensor comprising
    a light source emitting a light beam,
    a sensor unit formed by a dielectric block transparent to the light beam, a metal film provided on one surface of the dielectric block, and a sample holding portion which holds a sample on the metal film,
    a light beam projecting means which causes the light beam to enter the dielectric block to impinge upon the interface between said one surface of the dielectric block and the metal film so that total internal reflection conditions are satisfied at the interface, and
    a photodetector means which detects the intensity of the light beam reflected in total internal reflection at the interface and detects a state of attenuation in total internal reflection, wherein the improvement comprises that the relation

$$-2 \times 10^{-5} \leqq (n3 \blacksquare \Delta n1 - n1 \blacksquare \Delta n3) \leqq 2 \times 10^{-5}$$

is satisfied wherein n1 and n3 represent refractive indexes of the solvent of the sample liquid and the dielectric block, and Δn1 and Δn3 represent the rates of temperature-change dn1/dt and dn3/dt of the refractive indexes of the solvent of the sample liquid and the dielectric block.

2.  A sensor unit comprising

a dielectric block transparent to the light beam,
a metal film provided on one surface of the dielectric block, and
a sample holding portion which holds a sample on the metal film, wherein the improvement comprises that the relation

$$-2 \times 10^{-5} \leqq (n3 \blacksquare \Delta n1 - n1 \blacksquare \Delta n3) \leqq 2 \times 10^{-5}$$

is satisfied wherein n1 and n3 represent refractive indexes of the solvent of the sample liquid and the dielectric block, and $\Delta$n1 and $\Delta$n3 represent the rates of temperature-change dn1/dt and dn3/dt of the refractive indexes of the solvent of the sample liquid and the dielectric block.

**FIG.1**

SIGNAL PROCESSING SYSTEM

DISPLAY MEANS

EP 1 519 187 A1

# FIG.2

$\theta$sp

ANGLE OF INCIDENCE($\theta$)

**European Patent Office**

**EUROPEAN SEARCH REPORT**

Application Number

EP 04 02 2434

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/090668 A1 (NAYA MASAYUKI ET AL) 15 May 2003 (2003-05-15) * paragraphs [0069], [0277], [0280], [0284], [0308]; figure 1 * | 1,2 | G01N21/03 G01N21/55 |
| X | EP 1 186 881 A (FUJI PHOTO FILM CO LTD) 13 March 2002 (2002-03-13) * paragraphs [0047], [0081], [0092] - [0097], [0133] - [0135], [0163], [0187], [0194] - [0204]; figure 2 * | 1,2 | |
| X | US 2003/062842 A1 (NOMURA YOSHIMITSU) 3 April 2003 (2003-04-03) * paragraphs [0025] - [0033], [0055], [0058], [0059], [0079]; figures 2,3 * | 1,2 | |
| A | NATSUUME T ET AL: "A NEW HIGH HEAT RESISTANT, HIGH CLARITY, AND HIGH HUMIDITY RESISTANT POLYMER FOR OPTICAL USES" MATERIALS RESEARCH SOCIETY SYMPOSIUM PROCEEDINGS, MATERIALS RESEARCH SOCIETY, PITTSBURG, PA, US, vol. 150, 25 April 1989 (1989-04-25), pages 245-250, XP009007850 ISSN: 0272-9172 * the whole document * | 1,2 | TECHNICAL FIELDS SEARCHED (Int.Cl.7) G01N |
| A | SULTANOVA N G ET AL: "Measuring the refractometric characteristics of optical plastics" OPTICAL AND QUANTUM ELECTRONICS KLUWER ACADEMIC PUBLISHERS NETHERLANDS, vol. 35, no. 1, January 2003 (2003-01), pages 21-34, XP002309553 ISSN: 0306-8919 * paragraph [0003]; tables 2,4,5 * | 1,2 | |

-/--

The present search report has been drawn up for all claims

| Place of search | Date of completion of the search | Examiner |
|---|---|---|
| Munich | 27 December 2004 | Duijs, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# EP 1 519 187 A1

**European Patent Office**

## EUROPEAN SEARCH REPORT

Application Number

EP 04 02 2434

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | "Zeonex. Basic properties" ZEON CORPORATION . SPECIALTY PLASTICS PRODUCT INFORMATION, [Online] 20 August 2003 (2003-08-20), XP002309554 Retrieved from the Internet: URL:http://web.archive.org/web/20030820181 254/http://www.zeon.co.jp/business_e/enter prise/speplast/speplast1_8.html> [retrieved on 2004-12-07] * the whole document * ----- | 1,2 | |
| A | "Zeonex. Precise optical properties" ZEON CORPORATION . SPECIALTY PLASTICS PRODUCT INFORMATION, [Online] 20 August 2003 (2003-08-20), XP002309555 Retrieved from the Internet: URL:http://web.archive.org/web/20030820182 333/http://www.zeon.co.jp/business_e/enter prise/speplast/speplast1_7.html> [retrieved on 2004-12-07] * the whole document * ----- | 1,2 | TECHNICAL FIELDS SEARCHED (Int.Cl.7) |

The present search report has been drawn up for all claims

| Place of search | Date of completion of the search | Examiner |
|---|---|---|
| Munich | 27 December 2004 | Duijs, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

13

**EP 1 519 187 A1**

### ANNEX TO THE EUROPEAN SEARCH REPORT
### ON EUROPEAN PATENT APPLICATION NO.

EP 04 02 2434

This annex lists the patent family members relating to the patent documents cited in the above-mentioned European search report.
The members are as contained in the European Patent Office EDP file on
The European Patent Office is in no way liable for these particulars which are merely given for the purpose of information.

27-12-2004

| Patent document cited in search report | | Publication date | Patent family member(s) | | Publication date |
|---|---|---|---|---|---|
| US 2003090668 | A1 | 15-05-2003 | JP | 2003270130 A | 25-09-2003 |
| | | | JP | 2003294612 A | 15-10-2003 |
| | | | JP | 2004144477 A | 20-05-2004 |
| | | | JP | 2003207446 A | 25-07-2003 |
| EP 1186881 | A | 13-03-2002 | JP | 2002048707 A | 15-02-2002 |
| | | | JP | 2001330560 A | 30-11-2001 |
| | | | EP | 1186881 A1 | 13-03-2002 |
| | | | US | 2003189707 A1 | 09-10-2003 |
| | | | WO | 0169207 A1 | 20-09-2001 |
| US 2003062842 | A1 | 03-04-2003 | JP | 2003106992 A | 09-04-2003 |
| | | | DE | 10244876 A1 | 15-05-2003 |

EPO FORM P0459

For more details about this annex : see Official Journal of the European Patent Office, No. 12/82